# EUROPÄISCHE PATENTSCHRIFT

(11) **EP 4 065 390 B1**
(45) Veröffentlichungstag und Bekanntmachung des Hinweises auf die Patenterteilung: **24.01.2024**
(21) Anmeldenummer: 20792370.7
(22) Anmeldetag: 13.10.2020
(51) Int. Cl.: B60C 11/24, B60C 11/03

(54) **FAHRZEUGLUFTREIFEN**
PNEUMATIC VEHICLE TIRE
BANDAGE PNEUMATIQUE DE VÉHICULE

(30) Priorität: 27.11.2019 DE 102019218320
(43) Veröffentlichungstag der Anmeldung: 05.10.2022
(73) Patentinhaber: Continental Reifen Deutschland GmbH, 30165 Hannover (DE)
(72) Erfinder: RITTWEGER, Stefan, 30165 Hannover (DE); MENDELSKI, Philipp, 30165 Hannover (DE); NEUMANN, Marcel, 30165 Hannover (DE); TOMFORDE, Willem, 30165 Hannover (DE)
(74) Vertreter: Continental Corporation
(86) Internationale Anmeldenummer: PCT/EP2020/078745
(87) Internationale Veröffentlichungsnummer: WO 2021/104737

(56) Entgegenhaltungen:
- DE-A1-102017 202 939
- KR-A- 20140 017 393
- US-A- 2 706 509
- US-A1- 2011 079 333

## Beschreibung

Die Erfindung betrifft einen Fahrzeugluftreifen mit einem profilierten Laufstreifen mit zumindest einer Umfangsrille mit einem Rillengrund und zwei Rillenflanken, wobei am Rillengrund eine Anzahl von über den Umfang des Laufstreifens verteilt angeordneten, als Abriebindikatoren dienende Vorsprüngen ausgebildet ist, wobei sich jeder Vorsprung aus mehreren in radialer Richtung aufeinander positionierten, ausschließlich an die eine und an dieselbe Rillenflanke angebundenen Vorsprungteilen zusammensetzt, welche jeweils eine parallel zur und radial innerhalb der Laufstreifenperipherie verlaufende Indikatorfläche und an ihrem äußeren Umfang verlaufende Begrenzungsflächen aufweisen.

In Umfangsrillen von Laufstreifen ausgebildete, als Abriebindikatoren ("TWI", "tread wear indicator") dienende Vorsprünge sind in einer Vielzahl von Ausgestaltungen bekannt. Bekannt sind dabei Abriebindikatoren, welche nicht nur das Erreichen der gesetzlich vorgeschriebenen Mindestprofiltiefe sondern auch das Erreichen einer vor allem in Hinblick auf die Nässe- und Aquaplaningperformance kritischen Restprofiltiefe von üblicher Weise 3,0 mm anzeigen.

Ein Fahrzeugluftreifen der eingangs genannten Art ist beispielsweise aus der DE 10 2014 221 900 A1 bekannt. Der Fahrzeugluftreifen weist einen Laufstreifen mit zumindest einer Umfangsrille mit als Abriebindikatoren dienenden Vorsprüngen auf, welche sich aus drei in radialer Richtung aufeinander angeordneten Vorsprungteilen zusammensetzen. Der radial innerste Vorsprungteil weist die größte Indikatorfläche, der radial äußerste Vorsprungteil weist die kleinste Indikatorfläche auf. Der radial äußerste Vorsprungteil ist dabei mittig auf dem mittleren Vorsprungteil ausgebildet.

Aus der US 2011/0079333A1 ist ein Fahrzeugluftreifen mit einem Laufstreifen mit einer Umfangsrille mit einem Rillengrund und zwei Rillenflanken bekannt, wobei in der Umfangsrille zumindest ein an beide Rillenflanken angebundener, als Abriebindikator dienender Vorsprung ausgebildet ist. Der Vorsprung setzt sich aus zwei Vorsprungteilen mit jeweils einer parallel zur Laufstreifenperipherie verlaufenden Indikatorfläche zusammen. Die Vorsprünge sollen gegenüber den in Profilpositiven von Laufstreifen integrierten Abriebindikatoren mit farbigen Bestandteilen, wie beispielsweise farbigen Schichten, deswegen von Vorteil sein, weil sie das fortlaufende Mitverfolgen des Abriebzustands gestatten.

Die DE 2017 202 939 A1 offenbart einen Fahrzeugluftreifen mit einem Laufstreifen mit von Rillen begrenzten Profilblöcken, wobei die Rillen in Draufsicht T-Kreuzungen bilden. In den Kreuzungsbereichen befinden sich Vorsprünge mit einer maximalen Höhe von 10% bis 80% der Profiltiefe, wobei die Vorsprünge an jene Blockflanke angebunden sind, welche der Einmündung der an der T-Kreuzung einmündenden Rille gegenüberliegt. Gemäß einer Ausführungsform ist am Rillengrund der einmündenden Rille eine an den Vorsprung angebundene, flache Grundanhebung ausgebildet. Die Vorsprünge sowie die Grundanhebungen wirken als Steinauswerfer, wobei die Grundanhebungen zusätzlich die Vorsprünge stabilisieren.

Aus der KR 2014 0017393 A ist ein Fahrzeugluftreifen mit einem Laufstreifen mit Rillen mit an einer Rillenflanke angebundenen, im Wesentlichen quaderförmigen Vorsprüngen, welche in radialer Richtung von einer gewellt strukturierten Deckfläche begrenzt sind, bekannt. Die Vorsprünge dienen als Abriebindikatoren und sollen gut erkennbar sowie selbsterklärend sein.

Die US 2 706 509 A offenbart einen Fahrzeugluftreifen mit einem Laufstreifen mit Umfangsrillen, in welchen bei einigen Ausführungsbeispielen Vorsprünge vorgesehen sind, die ausschließlich an die eine und an dieselbe Rillenflanke angebundene, in radialer Richtung aufeinander positionierte Vorsprungteile aufweisen. Mittels solcher Vorsprünge soll der Laufstreifenabrieb gut verfolgbar sein.

Nach wie vor ist bei den bisher bekannten, als Abriebindikatoren wirkenden Vorsprüngen das Auftreten von Rissen im Übergangsbereich zum Rillengrund ein Problem. Da sich ausgebildete Risse häufig im Gummimaterial fortsetzen, ist es wünschenswert, die Gefahr der Rissbildung weiter zu reduzieren.

Der Erfindung liegt die Aufgabe zugrunde, bei einem Fahrzugluftreifen eingangs genannter Art die Rissbeständigkeit an der Basis der Vorsprünge bzw. am Übergangsbereich der Vorsprünge zum Rillengrund weiter zu verbessern.

Gelöst wird die gestellte Aufgabe erfindungsgemäß dadurch, dass sich jeder Vorsprung aus zwei quaderförmigen sowie in Umfangsrichtung langgestreckt ausgebildeten Vorsprungteilen zusammensetzt, welche über ihre gesamte Umfangserstreckung durchgehend an die Rillenflanke angebunden sind, wobei der radial innere Vorsprungteil in axialer Richtung breiter und in Umfangsrichtung länger ausgeführt ist als der radial äußere Vorsprungteil und mit einem die zugehörige Indikatorfläche aufweisenden, in Draufsicht und in axialer Richtung betrachtet flach U-förmigen Randabschnitt die am äußeren Umfang ausgebildeten Begrenzungsflächen des radial äußeren Vorsprungteiles gleichmäßig überragt und wobei die Begrenzungsflächen des radial inneren Vorsprungteiles zur radialen Richtung unter einem Winkel von 10° bis 20° geneigt sind.

Die gemäß der Erfindung vorgesehenen, als Abriebindikatoren wirkenden Vorsprünge setzen sich nur aus zwei Teilen zusammen, welche durchgehend an eine Rillenflanke angebunden sind. Die zur radialen Richtung unter einem Winkel von 10° bis 20° verlaufenden Begrenzungsflächen des radial inneren Vorsprungteiles verleihen dem Vorsprung eine besonders hohe Stabilität an seiner am Rillengrund liegenden Basis und erhöhen dadurch die Rissbeständigkeit (keine Kerbwirkung) im Übergangsbereich zum Rillengrund und daher in dem diesbezüglich besonders kritischen Bereich.

Bei einer bevorzugten Ausführung weist der Randabschnitt des radial inneren Vorsprungteiles, ermittelt am Niveau der Indikatorfläche, eine quer zur Erstreckungsrichtung des Randabschnittes ermittelte, insbesondere konstante Breite von 0,5 mm bis 1,5 mm, vorzugsweise von 0,8 mm bis 1,2 mm, auf. Dies trägt zu einer weiteren Erhöhung der Stabilität des Vorsprunges und zu einer guten Sichtbarkeit des radial inneren Vorsprungteiles bei.

Die "Stufe" des zweiteiligen Vorsprunges ist bei Sicht auf den Vorsprung besonders gut erkennbar, wenn die Begrenzungsflächen des radial äußeren Vorsprungteiles zur radialen Richtung unter einem Winkel von 0° bis 2°, insbesondere von 0°, verlaufen.

Bei einer weiteren bevorzugten Ausgestaltung ist der radial äußere Vorsprungteil mit zumindest einer von seiner Indikatorfläche ausgehenden, von der Rillenflanke beabstandeten, insbesondere als Schriftzeichen ausgeführten Vertiefung versehen. Eine solche Vertiefung bildet eine weitere "Stufe" des Abriebindikators, sodass ein Fortschreiten des Laufstreifenabriebs besser mitverfolgt werden kann. Die Vertiefung wird durch einen im zugehörigen Formteil der Vulkanisationsform vorhandenen, flachen Vorsprung ausgebildet, was im Hinblick auf die Entlüftung der Vulkanisationsform von Vorteil ist, sodass die Vertiefung auf zuverlässige Weise tadellos ausgeformt wird.

Ferner ist es günstig, wenn die Vertiefung(en) zu den Rändern der Indikatorfläche einen Abstand von mindestens 0,5 mm aufweist bzw. aufweisen.

Bevorzugter Weise befindet sich die Indikatorfläche des radial inneren Vorsprungteiles in einer in radialer Richtung ermittelten Höhe von 1,6 mm bis 2,2 mm, insbesondere von 1,6 mm oder 1,9 mm, und die Indikatorfläche des radial äußeren Vorsprungteiles in einer in radialer Richtung ermittelten Höhe von 2,6 mm bis 3,4 mm, insbesondere von 3,0 mm. Die Indikatorfläche des radial inneren Vorsprungteiles befindet sich daher auf der gesetzlich vorgeschriebenen Mindestprofiltiefe oder knapp über dieser. Die Indikatorfläche des radial äußeren Vorsprungteiles befindet sich auf einer vor allem Hinblick auf die Nässe- und Aquaplaningperformance des Reifens kritischen Tiefe.

Gemäß einer weiteren bevorzugten Ausführung beträgt der Winkel, unter welchem die Begrenzungsflächen des radial inneren Vorsprungteiles verlaufen, 13° bis 17°. Derart geneigte Begrenzungsflächen ermöglichen einen ausgewogenen Kompromiss zwischen einer guten Sichtbarkeit des radial inneren Vorsprungteiles und einer hohen Rissbeständigkeit im Übergangsbereich zum Rillengrund.

Eine weitere bevorzugte Ausführung ist dadurch gekennzeichnet, dass der radial innere Vorsprungteil -jeweils ermittelt am Niveau seiner Indikatorfläche - in axialer Richtung eine Breite von 35% bis 55%, insbesondere von 40% bis 50%, der Breite der Umfangsrille und in Umfangsrichtung eine Länge von 75% bis 125%, insbesondere von 90% bis 110%, der Breite der Umfangsrille aufweist.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Umfangsabschnitt einer Umfangsrille eines Laufstreifens eines Fahrzeugluftreifens mit einer Ausführungsvariante der Erfindung,
Fig. 2 eine vergrößerte Schrägansicht gemäß der in Fig. 1 durch den Pfeil S₂ angedeuteten Sichtrichtung,
Fig. 3 einen vergrößerten Schnitt entlang der Linie III-III der Fig. 1 und
Fig. 4 einen vergrößerten Schnitt entlang der Linie IV-IV der Fig. 1.

Gemäß der Erfindung ausgeführte Fahrzeugluftreifen sind insbesondere Reifen in Radialbauart für Personenkraftwagen, Vans oder Light-Trucks, wobei die Reifen insbesondere Sommerreifen sind.

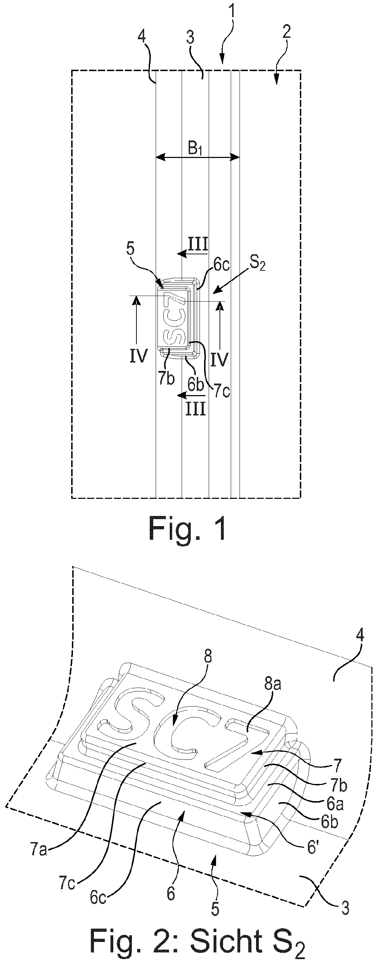

Fig. 1 zeigt eine Draufsicht auf einen Abschnitt einer gerade verlaufenden Umfangsrille 1, welche in insbesondere bekannter Weise ausgeführte Profilpositive 2, beispielsweise Profilbänder oder Profilblockreihen, voneinander trennt. Die nicht gezeigten Bereiche des Laufstreifens können in bekannter Weise ausgeführt sein.

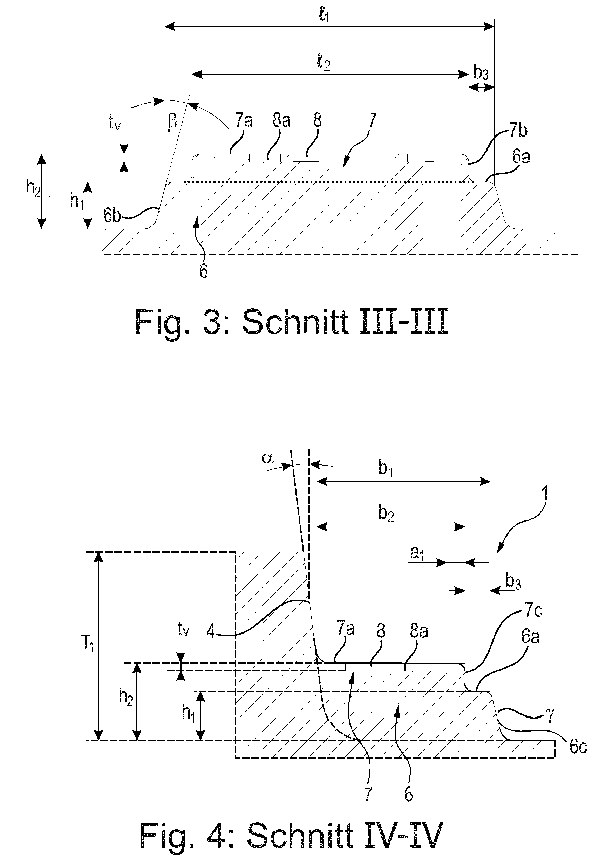

Die Umfangsrille 1 ist in der für den jeweiligen Reifentyp vorgesehenen Profiltiefe T₁ (Fig. 4) ausgeführt, welche für PKWs, Vans und Light-Trucks üblicherweise 6,5 mm bis 13,0 mm beträgt, und weist an der Laufstreifenperipherie in axialer Richtung eine Breite B₁ von 6,0 mm bis 13,0 mm, insbesondere von zumindest 10,0 mm, auf. Etwaige an der Laufstreifenperipherie vorgesehene Fasen und Übergangsrundungen bleiben bei der Ermittlung der Breite B₁ unberücksichtigt. Die Umfangsrille 1 ist durch einen Rillengrund 3 und zwei Rillenflanken 4 begrenzt, wobei die Rillenflanken 4, im Querschnitt der Umfangsrille 1 betrachtet, zur radialen Richtung unter einem Winkel α (Fig. 4) von 0° bis 10°, insbesondere von zumindest 3°, verlaufen.

In dem in Fig. 1 gezeigten Abschnitt der Umfangsrille 1 ist ein am Rillengrund 3 sitzender, an die in Fig. 1 linke Rillenflanke 4 angebundener, als Abriebindikator dienender Vorsprung 5 ausgebildet. In der Umfangsrille 1 ist eine Vielzahl von Vorsprüngen 5 vorgesehen, welche insbesondere derart verteilt sind, dass sie voneinander gegenseitige Abstände von 30 mm bis 70 mm aufweisen.

Wie insbesondere Fig. 2 zeigt, setzt sich der Vorsprung 5 aus einem radial inneren Vorsprungteil 6 und einem - bezogen auf die Umfangsrichtung - mittig auf diesem positionierten, radial äußeren Vorsprungteil 7 zusammen. Die Vorsprungteile 6, 7 grenzen jeweils an die in Fig. 1 linke Rillenflanke 4 an, sind quaderförmig sowie in Umfangsrichtung langgestreckt ausgebildet. Sämtliche Übergange zwischen den Vorsprungteilen 6, 7 sowie zwischen einem Vorsprungteil 6, 7 und dem Rillengrund 3 bzw. der entsprechenden Rillenflanke 4 sind in insbesondere bekannter Weise mit Radien von vorzugsweise 0,3 mm bis 0,5 mm verrundet ausgeführt. Diese Radien werden bei den nachfolgenden Angaben zu den Abmessungen der Vorsprungteile 6, 7 nicht berücksichtigt.

Der radial innere Vorsprungteil 6 ist in axialer Richtung breiter und in Umfangsrichtung länger ausgeführt als der radial äußere Vorsprungteil 7, wobei der radial innere Vorsprungteil 6 einen in Draufsicht und in axialer Richtung betrachtet flach U-förmigen, den radial äußeren Vorsprungteil 7 gleichmäßig überragenden Randabschnitt 6` aufweist. Der Randabschnitt 6` ist in radialer Richtung durch eine parallel zur Laufstreifenperipherie ausgerichtete Indikatorfläche 6a, in den Umfangsrichtungen jeweils durch eine Stirnfläche 6b und seitlich durch eine zwischen den Stirnflächen 6b verlaufende Flankenfläche 6c begrenzt. Die Stirnflächen 6b erstrecken sich in Draufsicht (Fig. 1) in axialer Richtung und verlaufen, im in Umfangsrichtung ausgerichteten Querschnitt betrachtet, zur radialen Richtung unter einem Winkel β (Fig. 3) von 10° bis 20°, insbesondere von 13° bis 17°. Die Flankenfläche 6c erstreckt sich in Draufsicht (Fig. 1) in Umfangsrichtung und verläuft, im in axialer Richtung ausgerichteten Querschnitt betrachtet, zur radialen Richtung unter einem Winkel γ (Fig. 4) von 10° bis 20°, insbesondere von 13° bis 17°, wobei der Winkel γ beim gezeigten Ausführungsbeispiel mit dem Winkel β übereinstimmt. Der radial innere Vorsprungteil 6 weist - jeweils ermittelt am Niveau seiner Indikatorfläche 6a - in axialer Richtung eine Breite b₁ (Fig. 4) von 35% bis 55%, insbesondere von 40% bis 50%, der Breite B₁ (Fig. 1) der Umfangsrille 1, in Umfangsrichtung eine Länge l₁ (Fig. 3) von 75% bis 125%, insbesondere von 90% bis 110%, der Breite B₁ (Fig. 1) der Umfangsrille 1 und in radialer Richtung eine Höhe h₁ (Fig. 3, Fig. 4) von 1,6 mm bis 2,2 mm, insbesondere von 1,9 mm, auf. Die Höhe h₁ entspricht daher zumindest der gesetzlich vorgeschriebenen Mindestprofiltiefe von 1,6 mm.

Wie Fig. 2 ferner zeigt, ist der radial äußere Vorsprungteil 7 in radialer Richtung durch eine parallel zur Laufstreifenperipherie ausgerichtete Indikatorfläche 7a, in den Umfangsrichtungen jeweils durch eine in Draufsicht (Fig. 1) in axialer Richtung ausgerichtete Stirnfläche 7b und seitliche durch eine in Draufsicht (Fig. 1) in Umfangsrichtung ausgerichtete Flankenfläche 7c begrenzt. Die Stirnflächen 7b sowie die Flankenfläche 7c verlaufen, im Querschnitt betrachtet, in radialer Richtung (Fig. 3, Fig. 4). Der radial äußere Vorsprungteil 7 endet in radialer Richtung in einer Höhe h₂ (Fig. 3, Fig. 4) von 2,6 mm bis 3,4 mm, insbesondere von 3,0 mm, weist - jeweils ermittelt am Niveau seiner Indikatorfläche 7a - in axialer Richtung eine Breite b₂ (Fig. 4) und in Umfangsrichtung eine Länge l₂ (Fig. 3) auf. Die Breite b₂ und die Länge l₂ sind derart gewählt, dass der bereits erwähnte, den radial äußeren Vorsprungteil 7 gleichmäßig überragende Randabschnitt 6` - ermittelt am Niveau der Indikatorfläche 6a eine - insbesondere konstante Breite b₃ (Fig. 3, Fig. 4) von 0,5 mm bis 1,5 mm, vorzugsweise von 0,8 mm bis 1,2 mm, aufweist. Wie Fig. 2 bis Fig. 4 zeigen, gehen beim gezeigten Ausführungsbeispiel von der Indikatorfläche 7a drei ausschließlich in den radial äußeren Indikatorteil 7 hineinragende Vertiefungen 8 aus, welche einen gegenüber dem Niveau der Indikatorfläche 7a in einer konstanten Tiefe tᵥ (Fig. 3, Fig. 4) von bis zu 0,5 mm befindlichen, ebenfalls eine Indikatorfläche bildenden Boden 8a aufweisen. Die Vertiefungen 8 weisen - ermittelt am Niveau der Indikatorfläche 7a - zu den Rändern der Indikatorfläche 7a einen Abstand a₁ (Fig. 4) von 0,5 mm bis 1,0 mm auf. Die Vertiefungen 8 sind in Draufsicht bevorzugt in Form von Schrift- oder Warnzeichen ausgebildet, wobei sie beim gezeigten Ausführungsbeispiel die Kurzform einer Reifenbezeichnung ("SC7") wiedergeben.

Die Erfindung ist auf das beschriebene Ausführungsbeispiel nicht beschränkt, sondern lediglich auf den von den Ansprüchen definierten Schutzumfang.

### Bezugszeichenliste

- 1: Umfangsrille
- 2: Profilpositiv
- 3: Rillengrund
- 4: Rillenflanke
- 5: Vorsprung
- 6: radial innerer Vorsprungteil
- 6': Randabschnitt
- 6a: Indikatorfläche
- 6b: Stirnfläche
- 6c: Flankenfläche
- 7: radial äußerer Vorsprungteil
- 7a: Indikatorfläche
- 7b: Stirnfläche
- 7c: Flankenfläche
- 8: Vertiefung
- 8a: Boden
- a₁: Abstand
- B₁, b₁, b₂,b₃: Breite
- l₁, l₂: Länge
- h₁, h₂: Höhe
- S₂: Pfeil (Sichtrichtung)
- tᵥ: Tiefe
- T₁: Profiltiefe
- α, β, γ: Winkel

## Patentansprüche

1. Fahrzeugluftreifen mit einem profilierten Laufstreifen mit zumindest einer Umfangsrille (1) mit einem Rillengrund (3) und zwei Rillenflanken (4), wobei am Rillengrund (3) eine Anzahl von über den Umfang des Laufstreifens verteilt angeordneten, als Abriebindikatoren dienende Vorsprüngen (5) ausgebildet ist, wobei sich jeder Vorsprung (5) aus mehreren in radialer Richtung aufeinander positionierten, ausschließlich an die eine und an dieselbe Rillenflanke (4) angebundenen Vorsprungteilen (6, 7) zusammensetzt, welche jeweils eine parallel zur und radial innerhalb der Laufstreifenperipherie verlaufende Indikatorfläche (6a, 7a) und an ihrem äußeren Umfang verlaufende Begrenzungsflächen (6b, 6c, 7b, 7c) aufweisen,
**dadurch gekennzeichnet,**
**dass** sich jeder Vorsprung (5) aus zwei quaderförmigen sowie in Umfangsrichtung langgestreckt ausgebildeten Vorsprungteilen (6, 7) zusammensetzt, welche über ihre gesamte Umfangserstreckung durchgehend an die Rillenflanke (4) angebunden sind, wobei der radial innere Vorsprungteil (6) in axialer Richtung breiter und in Umfangsrichtung länger ausgeführt ist als der radial äußere Vorsprungteil (7) und mit einem die zugehörige Indikatorfläche (6a) aufweisenden, in Draufsicht und in axialer Richtung betrachtet flach U-förmigen Randabschnitt (6') die am äußeren Umfang ausgebildeten Begrenzungsflächen (7b, 7b) des radial äußeren Vorsprungteiles (7) gleichmäßig überragt und wobei die Begrenzungsflächen (6b, 6c) des radial inneren Vorsprungteiles (6) zur radialen Richtung unter einem Winkel (β, γ) von 10° bis 20° geneigt sind.

2. Fahrzeugluftreifen nach Anspruch 1, **dadurch gekennzeichnet, dass** der Randabschnitt (6') des radial inneren Vorsprungteiles (6), ermittelt am Niveau der Indikatorfläche (6a), eine quer zur Erstreckungsrichtung des Randabschnittes (6') ermittelte, insbesondere konstante Breite (b₃) von 0,5 mm bis 1,5 mm, vorzugsweise von 0,8 mm bis 1,2 mm, aufweist.

3. Fahrzeugluftreifen nach Anspruch 1 oder 2, **dadurch gekennzeichnet, dass** die Begrenzungsflächen (7b, 7c) des radial äußeren Vorsprungteiles (7) zur radialen Richtung unter einem Winkel von 0° bis 2°, insbesondere von 0°, verlaufen.

4. Fahrzeugluftreifen nach einem der Ansprüche 1 bis 3, **dadurch gekennzeichnet, dass** der radial äußere Vorsprungteil (7) mit zumindest einer von seiner Indikatorfläche (7a) ausgehenden, von der Rillenflanke (4) beanstandeten, insbesondere als Schriftzeichen ausgeführten, Vertiefung (8) versehen ist.

5. Fahrzeugluftreifen nach Anspruch 4, **dadurch gekennzeichnet, dass** die Vertiefung(en) (8) zu den Rändern der Indikatorfläche (7a) einen Abstand (a₁) von mindestens 0,5 mm aufweist bzw. aufweisen.

6. Fahrzeugluftreifen nach einem der Ansprüche 1 bis 5, **dadurch gekennzeichnet, dass** sich die Indikatorfläche (6a) des radial inneren Vorsprungteiles (6) in einer in radialer Richtung ermittelten Höhe (h₁) von 1,6 mm bis 2,2 mm, insbesondere von 1,6 mm oder 1,9 mm, und die Indikatorfläche (7a) des radial äußeren Vorsprungteiles (7) in einer in radialer Richtung ermittelten Höhe (h₂) von 2,6 mm bis 3,4 mm, insbesondere von 3,0 mm, befindet.

7. Fahrzeugluftreifen nach einem der Ansprüche 1 bis 6, **dadurch gekennzeichnet, dass** der Winkel (γ), unter welchem die Begrenzungsflächen (6b, 6c) des radial innere Vorsprungteiles (6) verlaufen, 13° bis 17° beträgt.

8. Fahrzugluftreifen nach einem der Ansprüche 1 bis 7, **dadurch gekennzeichnet, dass** der radial innere Vorsprungteil (6) - jeweils ermittelt am Niveau seiner Indikatorfläche (6a) - in axialer Richtung eine Breite (b₁) von 35% bis 55%, insbesondere von 40% bis 50%, der Breite (B₁) der Umfangsrille (1) und in Umfangsrichtung eine Länge (l₁) von 75% bis 125%, insbesondere von 90% bis 110%, der Breite (B₁) der Umfangsrille (1) aufweist.

## Claims

1. Pneumatic vehicle tyre having a profiled tread with at least one circumferential channel (1) with a channel base (3) and two channel flanks (4), wherein a number of protrusions (5) which are distributed over the circumference of the tread and are used as wear indicators are formed on the channel base (3), wherein each protrusion (5) is composed of a plurality of protrusion parts (6, 7) which are positioned successively in the radial direction, are attached exclusively to the same channel flank (4) and each of which has an indicator surface (6a, 7a) running parallel to and radially within the tread periphery, and boundary surfaces (6b, 6c, 7b, 7c) running on their outer circumference,
**characterized**
**in that** each protrusion (5) is composed of two cuboidal protrusion parts (6, 7) which are elongate in the circumferential direction and are attached over their entire circumferential extent continuously to the channel flank (4), wherein the radially inner protrusion part (6) is wider in the axial direction and longer in the circumferential direction than the radially outer protrusion part (7) and protrudes uniformly with an edge portion (6'), which has the associated indicator surface (6a) and is of a flat U shape, as viewed in top view and in the axial direction, over the boundary surfaces (7b, 7b), formed on the outer circumference, of the radially outer protrusion part (7), and wherein the boundary surfaces (6b, 6c) of the radially inner protrusion part (6) are inclined with respect to the radial direction at an angle (β, γ) of 10° to 20°.

2. Pneumatic vehicle tyre according to Claim 1, **characterized in that** the edge portion (6') of the radially inner protrusion part (6), determined at the level of the indicator surface (6a), has an in particular constant width (bs), determined transversely with respect to the direction of extent of the edge portion (6'), of 0.5 mm to 1.5 mm, preferably of 0.8 mm to 1.2 mm.

3. Pneumatic vehicle tyre according to Claim 1 or 2, **characterized in that** the boundary surfaces (7b, 7c) of the radially outer protrusion part (7) run at an angle of 0° to 2°, in particular 0°, with respect to the radial direction.

4. Pneumatic vehicle tyre according to one of Claims 1 to 3, **characterized in that** the radially outer protrusion part (7) is provided with at least one depression (8) which emerges from its indicator surface (7a), is spaced apart from the channel flank (4) and is designed in particular in the form of letters.

5. Pneumatic vehicle tyre according to Claim 4, **characterized in that** the depression(s) (8) is or are at a distance (a₁) of at least 0.5 mm from the edges of the indicator surface (7a).

6. Pneumatic vehicle tyre according to one of Claims 1 to 5, **characterized in that** the indicator surface (6a) of the radially inner protrusion part (6) is at a height (h₁), determined in the radial direction, of 1.6 mm to 2.2 mm, in particular of 1.6 mm or 1.9 mm, and the indicator surface (7a) of the radially outer protrusion part (7) is located at a height (h₂), determined in the radial direction, of 2.6 mm to 3.4 mm, in particular of 3.0 mm.

7. Pneumatic vehicle tyre according to one of Claims 1 to 6, **characterized in that** the angle (γ) at which the boundary surfaces (6b, 6c) of the radially inner protrusion part (6) run is 13° to 17°.

8. Pneumatic vehicle tyre according to one of Claims 1 to 7, **characterized in that** the radially inner protrusion part (6) - in each case determined at the level of its indicator surface (6a) - has a width (b₁) of 35% to 55%, in particular of 40% to 50%, of the width (B₁) of the circumferential channel (1) in the axial direction and a length (l₁) of 75% to 125%, in particular of 90% to 110%, of the width (B₁) of the circumferential channel (1) in the circumferential direction.

## Revendications

1. Pneumatique de véhicule avec une bande de roulement profilée ayant au moins une rainure périphérique (1) avec un fond de rainure (3) et deux flancs de rainure (4), un certain nombre de saillies (5) servant d'indicateurs d'usure, réparties sur la périphérie de la bande de roulement, étant formées sur le fond de rainure (3), chaque saillie (5) est composée de plusieurs parties saillantes (6, 7) positionnées les unes sur les autres dans la direction radiale et reliées exclusivement à un et même flanc de rainure (4), qui présentent chacune une surface indicatrice (6a, 7a) s'étendant parallèlement à et radialement à l'intérieur de la périphérie de la bande de roulement et des surfaces de délimitation (6b, 6c, 7b, 7c) s'étendant sur sa périphérie extérieure,
**caractérisé**
**en ce que** chaque saillie (5) se compose de deux parties de saillie (6, 7) parallélépipédiques et allongées dans la direction périphérique, qui sont reliées de manière continue au flanc de la rainure (4) sur toute leur étendue périphérique, la partie de saillie (6) radialement intérieure étant plus large dans la direction axiale et plus longue dans la direction périphérique que la partie de saillie (7) radialement extérieure et comportant une portion de bord (6') qui présente la surface indicatrice (6a) correspondante, en forme de U plat vue de dessus et vue dans la direction axiale, dépassant uniformément les surfaces de délimitation (7b, 7b) de la partie saillante radialement extérieure (7) réalisées sur la périphérie extérieure, et les surfaces de délimitation (6b, 6c) de la partie saillante radialement intérieure (6) étant inclinées par rapport à la direction radiale d'un angle (β, y) allant de 10° à 20°.

2. Pneumatique de véhicule selon la revendication 1, **caractérisé en ce que** la portion de bord (6') de la partie saillante radialement intérieure (6), déterminée au niveau de la surface indicatrice (6a), présente une largeur (b3) déterminée transversalement à la direction d'extension de la portion de bord (6'), en particulier constante, allant de 0,5 mm à 1,5 mm, de préférence de 0,8 mm à 1,2 mm.

3. Pneumatique pour véhicule selon la revendication 1 ou la revendication 2, **caractérisé en ce que** les surfaces de délimitation (7b, 7c) de la partie saillante radialement extérieure (7) s'étendent selon un angle allant de 0° à 2°, en particulier de 0°, par rapport à la direction radiale.

4. Pneumatique pour véhicule selon l'une des revendications 1 à 3, **caractérisé en ce que** la partie saillante radialement extérieure (7) présente au moins un creux (8) partant de sa surface indicatrice (7a) et opposé au flanc de la rainure (4), en particulier réalisé sous forme de caractères.

5. Pneumatique pour véhicule selon la revendication 4, **caractérisé en ce que** le ou les creux (8) ont une distance (a₁) d'au moins 0,5 mm par rapport aux bords de la surface indicatrice (7a).

6. Pneumatique pour véhicule selon l'une des revendications 1 à 5, **caractérisé en ce que** la surface indicatrice (6a) de la partie saillante radialement intérieure (6) se trouve à une hauteur (h₁), déterminée dans la direction radiale, allant de 1,6 mm à 2,2 mm, notamment de 1,6 mm ou 1,9 mm, et la surface indicatrice (7a) de la partie saillante radialement extérieure (7) se trouve à une hauteur (h₂), déterminée dans la direction radiale, allant de 2,6 mm à 3,4 mm, notamment de 3,0 mm.

7. Pneumatique pour véhicule selon l'une des revendications 1 à 6, **caractérisé en ce que** l'angle (γ) selon lequel s'étendent les surfaces de délimitation (6b, 6c) de la partie saillante radialement intérieure (6) va de 13° à 17°.

8. Pneumatique pour véhicule selon l'une des revendications 1 à 7, **caractérisé en ce que** la partie saillante radialement intérieure (6) - déterminée dans chaque cas au niveau de sa surface indicatrice (6a) - présente dans la direction axiale une largeur (b₁) de 35% à 55%, en particulier de 40% à 50%, de la largeur (B₁) de la rainure circonférentielle (1) et dans la direction circonférentielle une longueur (l₁) allant de 75% à 125%, en particulier de 90% à 110%, de la largeur (B₁) de la rainure circonférentielle (1).
